# NEUE EUROPÄISCHE PATENTSCHRIFT

(11) **EP 1 969 211 B2**
(45) Veröffentlichungstag und Bekanntmachung des Hinweises auf die Entscheidung über den Einspruch: **21.08.2024**
(45) Hinweis auf die Patenterteilung: 03.08.2011
(21) Anmeldenummer: 06829201.0
(22) Anmeldetag: 30.11.2006
(51) Int. Cl.: F01N 3/025, F01N 3/035, F01N 3/20, F01N 9/00, F01N 3/36

(54) **ABGASANLAGE FÜR EIN KRAFTFAHRZEUG SOWIE VERFAHREN ZUR REGENERATION EINES PARTIKELFILTERS IN EINER KFZ-ABGASANLAGE**
EXHAUST GAS INSTALLATION OF A MOTOR VEHICLE AND METHOD FOR REGENERATING A PARTICLE FILTER IN AN EXHAUST GAS INSTALLATION OF A MOTOR VEHICLE
INSTALLATION DE GAZ D'ECHAPPEMENT DE VEHICULE A MOTEUR ET PROCEDE POUR REGENERER UN FILTRE A PARTICULES DANS UNE INSTALLATION DE GAZ D'ECHAPPEMENT DE VEHICULE A MOTEUR

(30) Priorität: 29.12.2005 DE 102005062924
(43) Veröffentlichungstag der Anmeldung: 17.09.2008
(73) Patentinhaber: Faurecia Emissions Control Technologies, Germany GmbH, 86154 Augsburg (DE)
(72) Erfinder: BREMSER, Kathrin, 86889 Landsberg (DE); RANALLI, Marco, 86199 Augsburg (DE); KLEMENT, Jürgen, 86333 Asbach-Bäumenheim (DE); HAHNL, Wolfgang, 04668 Grimma (DE)
(74) Vertreter: Prinz & Partner mbB
(86) Internationale Anmeldenummer: PCT/EP2006/011503
(87) Internationale Veröffentlichungsnummer: WO 2007/079832

(56) Entgegenhaltungen:
- EP-A1- 1 369 557
- EP-A1- 1 643 092
- EP-A2- 1 533 489
- WO-A1-2004/051059
- US-A1- 2006 021 332
- <<<N O N - C I T E D D O C U M E N T>>> MARCO RANALLI, STEFAN SCHMID: "Dieselkraftstoffverdampfer", MTZ MOTORTECHNISCHE ZEITSCHRIFT Bd/65.Jahrgang Nr9 1 September 2004 (2004-09-01)Seiten 658.-663

## Beschreibung

Die Erfindung betrifft ein Verfahren zur Regeneration eines Partikelfilters in einer Kfz-Abgasanlage.

Zur Einhaltung umweltgesetzlicher Vorgaben müssen die Abgase von verbrennungsmotorisch angetriebenen Kraftfahrzeugen einer Reinigung unterzogen werden. So werden zur Reduktion der partikelförmigen Emissionen der Abgase von Kraftfahrzeugen, die durch einen Dieselmotor oder einen mager betriebenen Benzinmotor angetrieben werden, geeignete Partikelfilter eingesetzt. Derartige Partikelfilter müssen von Zeit zu Zeit regeneriert werden, indem die auf der Filteroberfläche angesammelten Partikel abgebrannt werden. Hierzu wird z.B. stromaufwärts des Partikelfilters ein Brenner angeordnet, der die zum Abbrennen benötigte Wärme durch Verbrennen einer Kraftstoff-Luft-Mischung erzeugt. Zum Zünden der Kraftstoffluftmischung kann eine Glühkerze verwendet werden (DE 298 02 226 U1). Im Zusammenhang mit einem Brenner ist aus der DE 42 42 991 A1 außerdem die Nutzung einer Glühkerze zur Einbringung von Energie in den Flüssigbrennstoff bekannt.

Eine weitere, ebenfalls bekannte Anordnung zur Regeneration eines Partikelfilters sieht vor, dem Partikelfilter einen Oxidationskatalysator vorzuschalten, der durch Oxidation einer im Abgasstrom befindlichen oxidierbaren Substanz die zur Abbrennung der Rußpartikel benötigte Wärme erzeugt. Aus der DE 102 56 769 B4 ist beispielsweise ein System bekannt, bei dem stromaufwärts des Oxidationskatalysators eine Verdampfungseinheit ungeordnet ist, in der Kraftstoff verdampft und in den Abgasstrom eingeleitet wird.

Andere Systeme, bei denen ein Partikelfilter, ein diesem vorgeschalteter Oxidationskatalysator und eine Regeneriervorrichtung verwendet werden, sind bekannt aus der EP 1 533 489 A, der EP 1 369 557, der US 2006/021332 A und der EP 1 643 092 A.

Bei den aus dem Stand der Technik bekannten Systemen ergeben sich jedoch in der Praxis zahlreiche Schwierigkeiten, die auf eine Vielzahl von einander teilweise widersprechenden Anforderungen an das System zurückzuführen sind.

So richtet sich z.B. der Zeitpunkt der Regeneration nach dem Beladungszustand, also dem "Füllgrad" des Partikelfilters. Ist dieser Zeitpunkt zu früh gewählt, ist nicht genügend Ruß vorhanden, um eine stabile Regeneration durchzuführen. Ist er andererseits zu spät gewählt, verstopft der Partikelfilter, oder die Rußverbrennung erzeugt sehr hohe Temperaturen im Partikelfilter, die zu dessen Zerstörung führen.

Ist die Abgastemperatur vor dem Oxidationskatalysator zu niedrig, kann der zugeführte oxidierbare Dampf nicht thermisch umgesetzt werden. Er kondensiert im Oxidationskatalysator und führt zu seiner Zerstörung.

Wird zu viel Flüssigkeit in die Verdampfungseinheit eingeleitet, und kann die Flüssigkeit nicht ausreichend verdampfen, tritt sie im flüssigen Zustand in die Abgasanlage ein. Kann die in die Abgasanlage eintretende Flüssigkeit durch die heißen Abgase und die heißen Rohrwände nicht ausreichend nachverdampft werden, wird der nachfolgend angeordnete Oxidationskatalysator geschädigt.

Wird zu viel Flüssigkeit verdampft, wird durch den Katalysator zuviel Energie erzeugt und der Partikelfilter durch zu hohe Regenerationstemperaturen geschädigt. Gleichzeitig steigt der Flüssigkeitsverbrauch unnötig.

Wird zu wenig Flüssigkeit in den Verdampfer eingeleitet, kann der Katalysator nicht die für die Regeneration des Partikelfilters notwendige Temperaturerhöhung des Abgases erzeugen. Es erfolgt keine Regeneration des Partikelfilters, aber ein unnötiger Flüssigkeitsverbrauch.

Schaltet man ein in der Verdampfungseinheit vorgesehenes Heizelement zu früh ein, steigt der Stromverbrauch unnötig. Andererseits wird bei zu später Inbetriebnahme des Heizelements die oxidierbare Flüssigkeit nicht ausreichend verdampft, gelangt zum Teil im flüssigen Zustand in die Abgasanlage und schädigt den Oxidationskatalysator. Auch die Nachheizzeit des Heizelements bestimmt die ordnungsgemäße Umsetzung der Flüssigkeit in Dampf.

Daneben existieren weitere Einflußfaktoren, die vom Betriebspunkt des Motors, einem eventuell vorhandenen Abgasturbolader, Komponenten zur Abgasrückführung u.v.a. abhängen. Auch diese Faktoren beeinflussen die Regeneration des Partikelfilters und müssen vom Regenerationssystem berücksichtigt werden.

Der Erfindung liegt die Aufgabe zugrunde, die beschriebenen technischen Widersprüche zu lösen und die Regeneration eines Partikelfilters serientauglich und sicher zu machen.

Die Aufgabe der Erfindung wird gelöst durch ein Verfahren zur Regeneration eines Partikelfilters mit vorgeschaltetem Oxidationskatalysator in einer Kfz-Abgasanlage mit einer Regenerationsvorrichtung, die eine Verdampfungseinheit zur Einbringung eines aus einer oxidierbaren Flüssigkeit erzeugten Dampfes in den Abgasstrom vor dem Oxidationskatalysator umfaßt, wobei die Verdampfungseinheit ein in einem Gehäuse angeordnetes Heizelement sowie eine Flüssigkeitszuführung mit einer regelbaren Flüssigkeitspumpe aufweist. Das Verfahren weist die folgenden Schritte auf, die periodisch durchlaufen werden: Zunächst wird der Regenerationsvorgang in Abhängigkeit vom Gegendruck des Partikelfilters oder der seit dem letzten Regenerationsvorgang vergangenen Zeit eingeleitet (Schritt a). Anschließend wird das Heizelement eingeschaltet, sobald die Temperatur stromaufwärts des Oxidationskatalysators einen vorgegebenen Mindestwert übersteigt (Schritt b). Nachdem eine vorgegebene Vorheizzeit für das Heizelement abgewartet wurde (Schritt c), wird die Flüssigkeitspumpe mit einer vorgegebenen Förderleistung eingeschaltet (Schritt d) und eine vorgegebene Pumpdauer abgewartet (Schritt e). Die Flüssigkeitspumpe wird anschließend gemäß vorgegebener Parameter betrieben, falls stromabwärts des Oxidationskatalysators eine höhere Temperatur herrscht als stromaufwärts des Oxidationskatalysators (Schritt f). Daraufhin wird eine ebenfalls vorgegebene Regenerationsdauer abgewartet, die beginnt, sobald die Temperatur stromabwärts des Oxidationskatalysators einen vorgegebenen Mindestwert überschritten hat, wobei während der Regenerationsdauer die Temperatur stromabwärts des Partikelfilters periodisch überprüft und gegebenenfalls zumindest durch Beeinflussung der eingebrachten Flüssigkeitsmenge geregelt wird (Schritt g). Nach Ablauf der Regenerationsdauer wird die Flüssigkeitspumpe ausgeschaltet (Schritt h), eine vorgegebene Nachheizzeit des Heizelements abgewartet (Schritt i) und schließlich das Heizelement ausgeschaltet (Schritt j). Anschließend beginnt das Verfahren von neuem. Das erfindungsgemäße Verfahren stellt also nicht nur sicher, daß die Regeneration zum richtigen Zeitpunkt eingeleitet wird (Schritt a) und die Abgastemperatur vor dem Oxidationskatalysator hoch genug ist (Schritt b), sondern gewährleistet durch die Vor- und die Nachheizzeit auch ein sicheres Verdampfen der oxidierbaren Flüssigkeit. Eine genau angepaßte Flüssigkeitsdosierung, die einer Beschädigung oder gar Zerstörung des Partikelfilters vorbeugt, wird durch die temperaturabhängige Regelung (Schritt g) erreicht. Somit wird das erfindungsgemäße Verfahren sämtlichen eingangs genannten Anforderungen gerecht.

Um eine Beschädigung des Systems zu verhindern, kann ein Fehler registriert werden, falls nach dem Abwarten der vorgegebenen Pumpdauer die Temperatur stromabwärts des Oxidationskatalysators nicht höher ist als die Temperatur stromaufwärts des Oxidationskatalysators.

Vorzugsweise wird nach dem Registrieren des Fehlers zu Schritt d) gesprungen, solange die Anzahl der registrierten Fehler einen vorgegebenen Maximalwert nicht überschreitet.

Nach Überschreiten des vorgegebenen Maximalwerts für registrierte Fehler sollte der Regenerationsvorgang abgebrochen und ein Fehlersignal ausgegeben werden. Dabei kann es sich beispielsweise um das Einschalten einer Fehlersignallampe handeln, die den Fahrer des Kraftfahrzeugs darauf aufmerksam macht, daß eine Reparatur erforderlich ist.

Um zu verhindern, daß der Partikelfilter durch zu hohe Regenerationstemperaturen geschädigt wird, wird im Zuge der Temperaturregelung während der Regenerationsdauer vorzugsweise die Flüssigkeitspumpe ausgeschaltet, sobald die Temperatur stromabwärts des Partikelfilters während der Regenerationsdauer (Schritt g) einen vorgegebenen ersten Wert übersteigt.

Gemäß einer ersten Ausführungsform der Erfindung wird nach dem Ausschalten der Flüssigkeitspumpe während der Regenerationsdauer der Betrieb der Flüssigkeitspumpe gemäß vorgegebener Parameter wieder aufgenommen, solange die vorgegebene Regenerationsdauer nicht beendet ist und sobald eine der folgenden Bedingungen eintritt, die in der angegebenen Reihenfolge periodisch geprüft werden:
die Temperatur stromabwärts des Partikelfilters liegt unterhalb eines vorgegebenen zweiten Werts,
die Temperatur stomabwärts des Oxidationskatalysators unterschreitet einen vorgegebenen Mindestwert,
die Temperatur stromabwärts des Partikelfilters liegt nicht länger oberhalb des vorgegebenen ersten Wertes.

Auf diese Weise wird verhindert, daß dem Abgasstrom während der Regenerationsdauer eine zu geringe Flüssigkeitsmenge zugeführt wird, die die Regeneration beeinträchtigen würde.

Gemäß einer zweiten Ausführungsform der Erfindung wird ein PID-Regler zur Regelung der Temperatur während der Regenerationsdauer (Schritt g) eingesetzt, sofern die Temperatur stromabwärts des Oxidationskatalysators innerhalb eines vorgegebenen Regelungsintervalls liegt. Ein solcher PID-Regler bietet den Vorteil einer schnelleren Temperaturregelung als eine Regelung allein durch Variation der eingebrachten Flüssigkeitsmenge. Als Regelungsparameter wird die Temperatur stromabwärts des Oxidationskatalysators, also unmittelbar stromaufwärts des Partikelfilters, herangezogen.

Um eine durch systembedingte Schwingungsvorgänge hervorgerufene "Überregelung" des PID-Reglers zu verhindern, sollte nach jedem Regelungsvorgang des PID-Reglers eine Überprüfung erfolgen, ob die Temperatur stromabwärts des Oxidationskatalysators noch innerhalb des vorgegebenen Regelungsintervalls liegt.

Vorzugsweise wird bei der Variante mit PID-Regelung nach dem Ausschalten der Flüssigkeitspumpe während der Regenerationsdauer der Betrieb der Flüssigkeitspumpe gemäß vorgegebener Parameter wieder aufgenommen, falls die Temperatur stromabwärts des Partikelfilters unterhalb eines vorgegebenen zweiten Wertes liegt und die Temperatur stromabwärts des Oxidationskatalysators außerhalb des vorgegebenen Regelungsintervalls für den PID-Regler liegt. Dies gilt natürlich wiederum nur für die Zeitdauer der Regeneration.

Zusätzlich kann während des Betriebs des Heizelements der durch das Heizelement fließende Strom überwacht werden.

Es versteht sich von selbst, daß der Regenerationsvorgang nur bei laufendem Motor eingeleitet wird.

Weitere Merkmale und Vorteile der Erfindung ergeben sich aus der nachfolgenden Beschreibung mehrerer bevorzugter Ausführungsformen anhand der beigefügten Zeichnung. In dieser zeigt:
- Figur 1 eine schematische Darstellung einer Abgasanlage;
- Figur 2a ein Flußdiagramm eines ersten Teils des erfindungsgemäßen Verfahrens;
- Figur 2b ein Flußdiagramm eines direkt an den ersten Teil anschließenden zweiten Teils des erfindungsgemäßen Verfahren gemäß einer ersten Variante;
- Figur 2c ein Flußdiagramm des dritten Teils des erfindungsgemäßen Verfahrens, der unmittelbar an den zweiten Teil anknüpft; und
- Figur 3 ein Flußdiagramm eines alternativen zweiten Teils des erfindungsgemäßen Verfahrens, der anstelle des Teils aus Figur 2b treten kann.

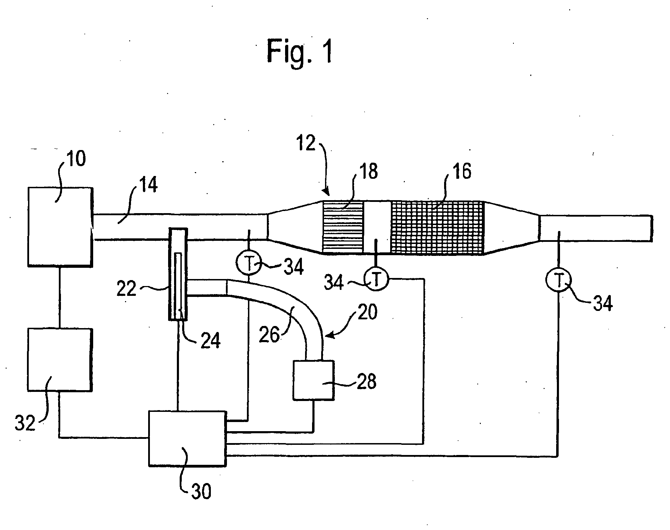

Figur 1 zeigt schematisch einen Verbrennungsmotor 10 eines Kraftfahrzeugs und eine nachgeschaltete Abgasanlage 12. Insbesondere handelt es sich bei dem Verbrennungsmotor 10 um einen Dieselmotor. Die Abgasanlage 12 weist eine Abgasleitung 14 auf, die zu einem Partikelfilter 16 mit vorgeschaltetem Oxidationskatalysator 18 führt. Stromaufwärts des Oxidationskatalysators 18 ist eine Verdampfungseinheit 20 vorgesehen, die ein in einem Gehäuse 22 angeordnetes Heizelement 24, hier in Form einer Glühkerze, sowie eine Flüssigkeitszuführung 26 mit einer regelbaren Flüssigkeitspumpe 28 aufweist. Insbesondere handelt es sich bei der Flüssigkeitszuführung 26 um eine Kraftstoffleitung und bei der Flüssigkeitspumpe 28 um eine Kraftstoffpumpe mit Anschluß zum Kraftstofftank des Fahrzeugs (nicht gezeigt). Der Kraftstoff kann auch der Kraftstoffrücklaufleitung entnommen werden; in diesem Fall ist der Kraftstoff bereits vorgewärmt.

Die Verdampfungseinheit 20 bildet einen Teil einer Regenerationsvorrichtung für den Partikelfilter 16, die weiterhin eine Regelvorrichtung 30 zur Regelung der Flüssigkeitspumpe 28 umfaßt. Auch das Heizelement 24 steht mit der Regelvorrichtung 30 in Verbindung und kann durch diese angesteuert werden. Die Regelvorrichtung 30 wiederum ist mit der Motorsteuerung 32 verbunden oder, alternativ, direkt in diese integriert.

Die Abgasanlage 12 weist weiterhin mehrere Temperatursensoren 34 auf, die ebenfalls mit der Regelvorrichtung 30 verbunden sind und die Temperatur vor und nach dem Oxidationskatalysator sowie die Temperatur nach dem Partikelfilter 16 bestimmen. Ferner können Drucksensoren (nicht gezeigt) vorgesehen sein, mittels denen sich der Gegendruck des Partikelfilters 16 bestimmen läßt.

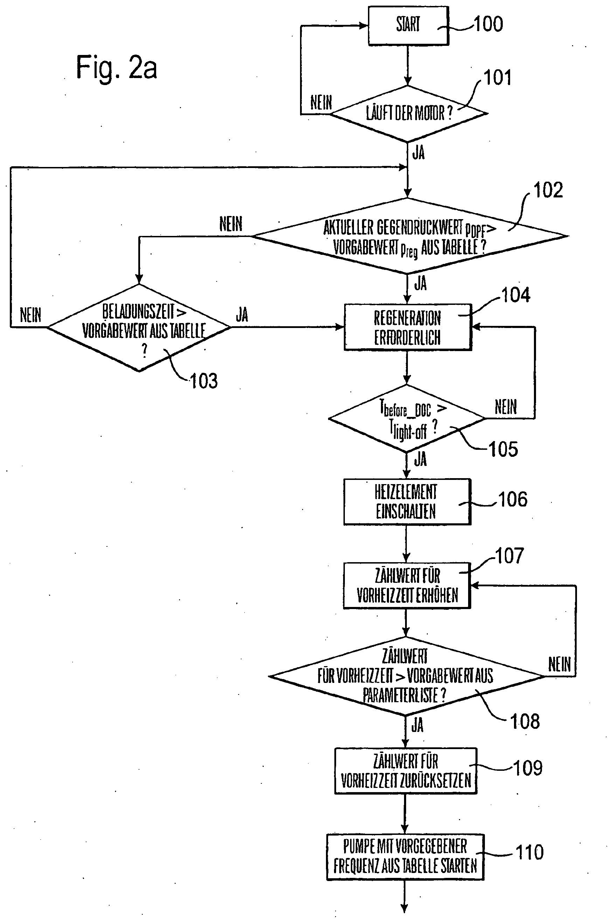

Zur Regeneration des Partikelfilters 16 findet ein Verfahren Anwendung, das im folgenden anhand der Figuren 2a bis 2c beschrieben wird.

Nach dem Start des Verfahrens (Schritt 100) erfolgt zunächst im Schritt 101 eine Überprüfung, ob der Verbrennungsmotor 10 läuft. Ist dies nicht der Fall, so erfolgt keine weitere Aktivität; das Verfahren startet von neuem. Läuft der Motor, so wird im nächsten Schritt 102 der aktuelle Gegendruckwert p_{DPF} des Partikelfilters 16 mit Hilfe der Drucksensoren ermittelt und überprüft, ob dieser aktuelle Gegendruckwert einen vorgegebenen Grenzwert p_{reg} für die Regeneration überschreitet. Ist dies der Fall, so erfolgt die Feststellung eines Regenerationserfordemis (Schritt 104). Liegt der aktuelle Gegendruckwert p_{DPF} jedoch unterhalb des vorgegebenen Grenzwerts p_{reg}, so wird in einem Schritt 103 überprüft, ob die seit dem letzten Regenerationsvorgang vergangene Zeit (auch als "Beladungszeit" des Partikelfilters bezeichnet) einen vorgegebenen Grenzwert überschreitet. Ist dies der Fall, wird ebenfalls mit Schritt 104 fortgefahren, ansonsten wird zum Schritt 102 zurückgesprungen.

Nachdem das Regenerationserfordemis festgestellt wurde, wird überprüft, ob die Temperatur stromaufwärts des Oxidationskatalysators 18 T_{before_DOC} einen vorgegebenen Mindestwert T_{light-off} übersteigt (Schritt 105). Ist dies der Fall, wird im nächsten Schritt 106 das Heizelement (bei der vorliegenden Ausführungsform die Glühkerze) eingeschaltet. Liegt die Temperatur vor dem Oxidationskatalysator unterhalb des Mindestwertes T_{light-off}, so wird ausgehend von Schritt 105 zu Schritt 104 zurückgesprungen.

Nach Einschalten des Heizelements wird eine vorgegebene Vorheizzeit abgewartet, indem im Schritt 107 zunächst ein Zählwert für die Vorheizzeit erhöht wird und im Schritt 108 überprüft wird, ob der Wert des Zählers für die Vorheizzeit einen Vorgabewert übersteigt. Ist dies nicht der Fall, so werden die Schritte 107 und 108 so lange wiederholt, bis schließlich der Wert für die Vorheizzeit den Vorgabewert überschreitet. Anschließend wird der Zähler für die Vorheizzeit zurückgestellt (Schritt 109) und die Flüssigkeitspumpe 28 mit einer vorgegebenen Förderleistung eingeschaltet (Schritt 110). Die Förderleistung kann dabei beispielsweise über eine Pumpfrequenz eingestellt werden.

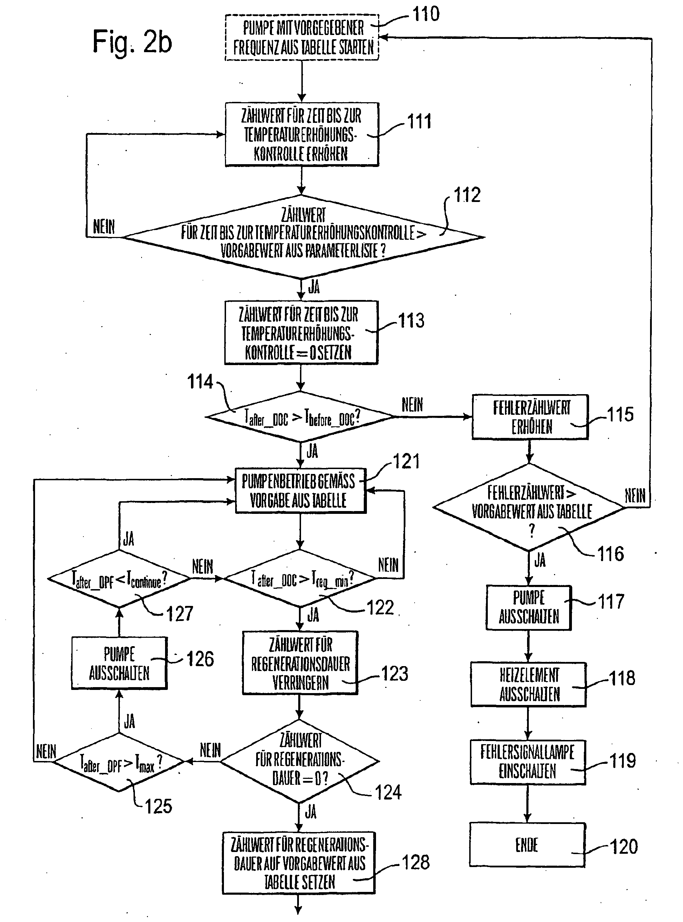

Nach dem Einschalten der Flüssigkeitspumpe (siehe Figur 2b) wird eine vorgegebene Pumpdauer abgewartet, indem ein Zählwert für die Zeit bis zur Messung eines Temperaturanstiegs nach dem Oxidationskatalysator 18 (alternativ auch nach dem Partikelfilter 16) vergrößert wird (Schritt 111) und anschließend überprüft wird, ob der Zählwert für die Zeit bis zur Temperaturmessung bereits einen vorgegebenen Wert übersteigt (Schritt 112). Auch die Schritte 111 und 112 werden so lange wiederholt, bis die vorgegebene Pumpdauer, die der vorgegebenen Wartezeit bis zur Temperaturmessung entspricht, erreicht wurde.

Anschließend wird der Zählwert für die Zeit bis zur Temperaturmessung auf Null gesetzt (Schritt 113) und überprüft, ob die Temperatur nach dem Oxidationskatalysator 18 T_{after_DOC} erwartungsgemäß größer als die Temperatur vor dem Oxidationskatalysator T_{before_DOC} ist (Schritt 114). Ist dies der Fall, so wird die Flüssigkeitspumpe 28 gemäß vorgegebener Parameter betrieben (Schritt 120).

Andernfalls wird ein Fehler registriert, indem der Wert eines Fehlerzählers um 1 vergrößert wird (Schritt 115), woraufhin überprüft wird, ob der Fehlerzählwert bereits größer als ein vorgegebener Maximalwert für registrierte Fehler ist (Schritt 116). Ist dies nicht der Fall, so setzt das Verfahren mit dem Schritt 110, nämlich dem Einschalten der Pumpe mit einer vorgegebenen Förderleistung, wieder ein. Übersteigt der Fehlerzählwert jedoch bereits den vorgegebenen Maximalwert, so wird der Regenerationsvorgang abgebrochen, indem zunächst die Flüssigkeitspumpe (Schritt 117) und anschließend das Heizelement 24 ausgeschaltet wird (Schritt 118). Um den Halter des Fahrzeugs zur Reparatur bzw. Systemüberprüfung aufzufordern, wird schließlich noch eine Fehlersignallampe eingeschaltet (Schritt 119), und das Regenerationsverfahren endet mit dem Schritt 120, um bis nach einer möglichen Reparatur nicht wieder aufgenommen zu werden.

Herrscht erwartungsgemäß stromabwärts des Oxidationskatalysators 18 eine höhere Temperatur als stromaufwärts des Oxidationskatalysators, so wird, wie bereits erwähnt, die Flüssigkeitspumpe 28 gemäß vorgegebener Parameter betrieben (Schritt 121). Anschließend wird überprüft, ob die Temperatur nach dem Oxidationskatalysator 18 T_{after_DOC} einen für eine erfolgreiche Regeneration nötigen, vorgegebenen Mindestwert T_{reg_min} überschritten hat (Schritt 122). Ist dies der Fall, so wird ein Zählwert für die Regenerationsdauer, der einen vorgegebenen positiven (also von Null verschiedenen) Wert aufweist, verringert (Schritt 123). Im darauffolgenden Schritt 124 wird überprüft, ob der Zählwert für die Regenerationsdauer gleich Null ist, also die vorgegebene Regenerationsdauer bereits erreicht wurde. Hat die Temperatur stromabwärts des Oxidationskatalysators 18 hingegen den vorgegebenen Mindestwert T_{reg_min} noch nicht erreicht, so wird die Flüssigkeitspumpe 28 weiter betrieben, wobei die Parameter für den Pumpenbetrieb variiert werden können.

Solange das Ende der Regenerationsdauer noch nicht erreicht ist, wird im Anschluß an Schritt 124 überprüft, ob die Temperatur stromabwärts des Partikelfilters T_{after_DPF} einen vorgegebenen ersten Wert Tₘₐₓ übersteigt. Ist dies nicht der Fall, besteht also keine Gefahr, daß der Partikelfilter 16 zu heiß wird, so wird das Verfahren daraufhin ab Schritt 121 so lange weiter durchlaufen, bis die Regenerationsdauer beendet ist, was im Schritt 124 festgestellt wird.

Übersteigt hingegen die Temperatur nach dem Partikelfilter 16 die vorgegebene Temperatur Tₘₐₓ, so wird die Flüssigkeitspumpe 28 ausgeschaltet (Schritt 126), um auf diese Weise die nach dem Partikelfilter 16 (und auch in diesem) herrschende Temperatur zu senken. Anschließend wird in einem Schritt 127 überprüft, ob die Temperatur nach dem Partikelfilter T_{after_DPF} unterhalb eines vorgegebenen zweiten Werts T_{continue} liegt, bis zu dem eine weitere Zufuhr von oxidierbarer Flüssigkeit zur Verdampfungseinheit 20 unkritisch ist. Liegt also die Temperatur nach dem Partikelfilter unterhalb T_{continue}, so wird der Betrieb der Flüssigkeitspumpe 28 gemäß vorgegebener Parameter wieder aufgenommen, und das Regenerationsverfahren wird mit Schritt 121 fortgeführt, bis die Regenerationsdauer verstrichen ist (Schritt 124). Dabei werden die Schritte 121 bis 124 und ggf. auch 125 bis 127 mehrmals durchlaufen.

Liegt die Temperatur nach dem Partikelfilter nicht unterhalb des vorgegebenen zweiten Werts T_{continue}, so wird vom Schritt 127 zum Schritt 122 weitergegangen, in dem die Temperatur nach dem Oxidationskatalysator 18 mit dem für die Regeneration erforderlichen Mindestwert T_{reg_min} verglichen wird, ohne daß der Betrieb der Pumpe wieder aufgenommen wird. In diesem Fall wird also der Pumpenbetrieb frühestens dann wieder aufgenommen, wenn im nochmals durchlaufenen Verfahrensschritt 125 die Temperatur nach dem Partikelfilter T_{after_DPF} unterhalb den ersten Vorgabewert Tₘₐₓ gesunken ist, woraufhin zu Schritt 121 gesprungen wird.

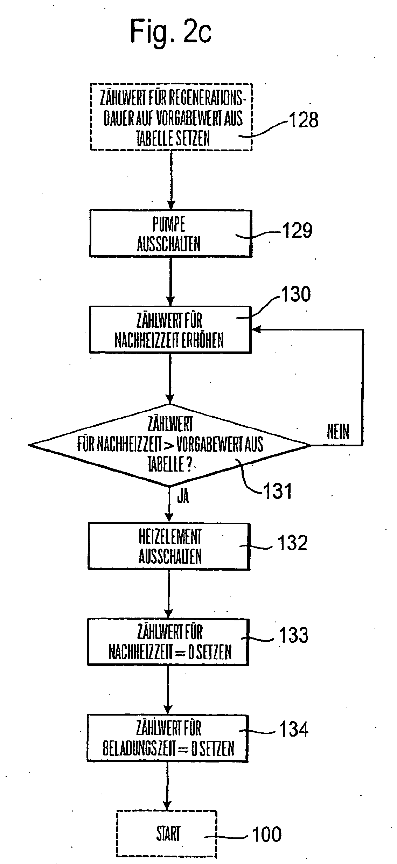

Sobald im Schritt 124 festgestellt wird, daß die vorgegebene Regenerationsdauer beendet ist, wird der Zählwert für die Regenerationsdauer auf einen Vorgabewert, der in der Regelvorrichtung 30 hinterlegt ist, gesetzt (Schritt 128), und die Flüssigkeitspumpe 28 wird ausgeschaltet (Schritt 129, siehe Figur 2c). Anschließend wird eine vorgegebene Nachheizzeit des Heizelements 24 abgewartet, indem im Verfahrensschritt 130 ein Zählwert für die Nachheizzeit erhöht und anschließend mit einem Vorgabewert verglichen wird (Schritt 131). Solange der Zählwert für die Nachheizzeit den vorgegebenen Wert nicht übersteigt, werden die Schritte 130 und 131 immer wieder ausgeführt. Sobald die vorgegebene Nachheizzeit erreicht wurde, wird das Heizelement 24, hier die Glühkerze, ausgeschaltet (Schritt 132) und der Zählwert für die Nachheizzeit gleich Null gesetzt (Schritt 133).

Anschließend wird der Zähler für die seit dem letzten Regenerationsvorgang vergangene Zeit (auch als "Beladungzeit" des Partikelfilters 16 bezeichnet) auf Null zurückgesetzt (Schritt 134), und das Verfahren springt zurück zum Start (Schritt 100). Auf diese Weise wird eine diskontinuierliche, periodische Regeneration des Partikelfilters 16 erreicht.

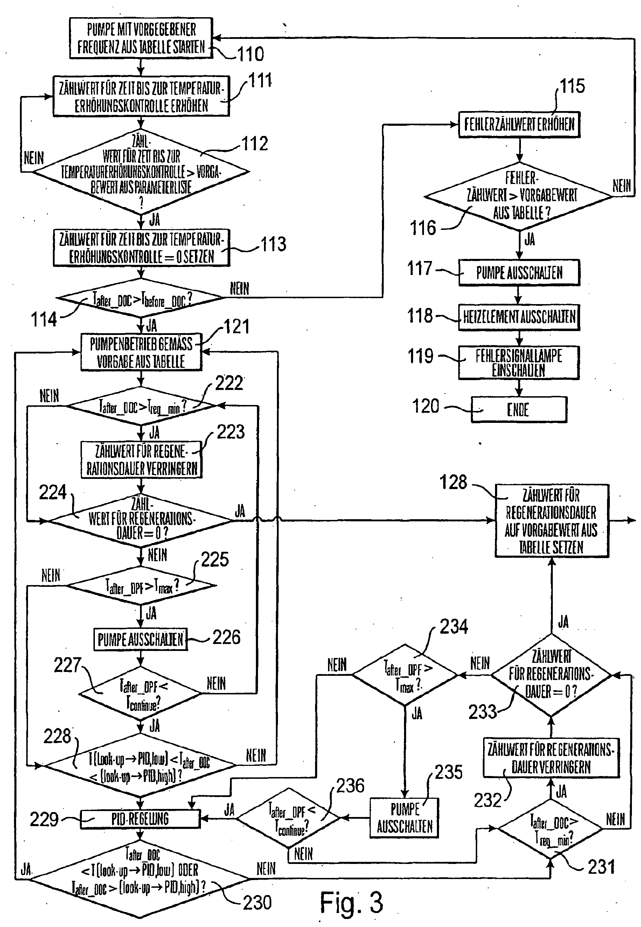

Figur 3 zeigt den mittleren Teil eines Verfahrens zur Regeneration des Partikelfilters 16 gemäß einer zweiten Ausführungsform der Erfindung, das sich vom bisher beschriebenen Verfahren der Figuren 2a bis 2c lediglich in der Art der Temperaturregelung während der Regenerationsdauer unterscheidet. Der in Figur 3 nicht gezeigte erste Verfahrensteil entspricht der Figur 2a, der letzte Teil entspricht der Figur 2c. Der Verfahrensteil gemäß Figur 3 ersetzt also lediglich den Teil gemäß Figur 2b.

Dabei verläuft das Verfahren gemäß der zweiten Variante bis einschließlich Schritt 121 analog zum bereits beschriebenen Verfahren. Im anschließenden Schritt 222 wird dann ebenfalls geprüft, ob die Temperatur nach dem Oxidationskatalysator 18 den vorgegebenen Mindestwert für die Regeneration T_{reg_min} übersteigt. Ist dies der Fall, so wird im nächsten Schritt 223 der Zählwert für die Regenerationsdauer verringert und anschließend (Schritt 224) überprüft, ob der Zählwert für die Regenerationsdauer gleich Null, also die Regenerationsdauer bereits beendet ist.

Im Unterschied zum Verfahren gemäß der ersten Ausführungsform wird im Fall, daß die Temperatur nach dem Oxidationskatalysator die vorgegebene Mindesttemperatur T_{reg_min} nicht erreicht, mit Schritt 224 des Verfahrens fortgefahren. Solange die vorgegebene Regenerationsdauer nicht beendet ist, wird anschließend überprüft, ob die Temperatur nach dem Partikelfilter 16 den vorgegebenen ersten Wert Tₘₐₓ übersteigt. Ist dies der Fall, wird wieder die Flüssigkeitspumpe 28 ausgeschaltet (Schritt 226) und anschließend geprüft, ob die Temperatur nach dem Partikelfilter unterhalb eines zweiten Wertes T_{continue} liegt (Schritt 227). Ist dies der Fall oder wird im Schritt 225 festgestellt, daß die Temperatur nach dem Partikelfilter den vorgegebenen ersten Temperaturwert Tₘₐₓ nicht übersteigt, wird anschließend im Schritt 228 überprüft, ob die Temperatur stromabwärts des Oxidationskatalysators 18 innerhalb eines vorgegebenen Regelungsintervalls, nämlich zwischen den vorgegebenen Werten T (look-up→PID, low) und T (look-up→PID, high), liegt. Ist die Temperatur nach dem Partikelfilter hingegen nicht kleiner als T_{continue}, so wird das Verfahren mit dem Schritt 222 fortgeführt.

Liegt die Temperatur nach dem Oxidationskatalysator im vorgegebenen Regelungsintervall, so wird ein PID-Regler, der in die Regelvorrichtung 30 integriert sein kann, zur Regelung der Temperatur eingesetzt (Schritt 229), um diese auf einen optimalen Temperaturwert für die Regeneration zu bringen. Der PID-Regler bietet dabei den Vorteil, wesentlich schneller die gewünschte Temperatur einstellen zu können, als dies über das reine Ein- und Ausschalten der Flüssigkeitspumpe 28 möglich wäre. Nach erfolgtem Regelungsvorgang 229 erfolgt im Schritt 230 eine Überprüfung, ob die Temperatur stromabwärts des Oxidationskatalysators 18 nun möglicherweise außerhalb des vorgegebenen Regelungsintervalls liegt, ob also der PID-Regler zu stark in die eine oder andere Richtung geregelt hat. Sollte dies der Fall sein, so wird zu Schritt 121 zurückgesprungen; liegt die Temperatur nach dem Oxidationskatalysator jedoch noch innerhalb des Regelungsintervalls, wird mit Schritt 231 fortgefahren, der Schritt 222 entspricht, und überprüft, ob die Temperatur nach dem Oxidationskatalysator 18 oberhalb der vorgegebenen Mindesttemperatur zur Regeneration T_{reg_min} liegt. Ist dies der Fall, so wird der Zählwert für die Regenerationsdauer verringert und anschließend überprüft, ob dieser Zählwert gleich Null ist (Schritte 232, 233, diese entsprechen den Schritten 223 und 224). Liegt hingegen die Temperatur nach dem Oxidationskatalysator unterhalb der erforderlichen Mindesttemperatur zur Regeneration T_{reg_min}, so wird von Schritt 231 direkt zu Schritt 233 gesprungen, ohne daß der Zählwert für die Regenerationsdauer verringert würde.

Solange die Regenerationsdauer nicht beendet ist, wird anschließend die Temperatur nach dem Partikelfilter 16 dahingehend geprüft, ob sie den vorgegebenen ersten Temperaturwert Tₘₐₓ übersteigt (Schritt 234). Ist dies nicht der Fall, so wird mit Schritt 229, nämlich dem Regelungsvorgang durch den PID-Regler, fortgefahren, andernfalls wird die Flüssigkeitspumpe 28 ausgeschaltet (Schritt 235) und überprüft, ob die Temperatur nach dem Partikelfilter 16 unterhalb des zweiten Vorgabewerts T_{continue} liegt (Schritt 236). Ist die Temperatur nach dem Partikelfilter geringer als T_{continue}, so erfolgt ebenfalls ein Regelungsvorgang durch den PID-Regler (Schritt 229); übersteigt jedoch die Temperatur nach dem Partikelfilter 16 die Temperatur T_{continue}, so wird mit Schritt 231 fortgefahren, nämlich der Überprüfung, ob die Temperatur nach dem Oxidationskatalysator den vorgegebenen Mindestwert T_{reg_min} übersteigt.

Beim Verfahren gemäß der zweiten Ausführungsform wird also ebenfalls die Flüssigkeitspumpe 28 immer dann ausgeschaltet, sobald die Temperatur stromabwärts des Partikelfilters 16 während der Regenerationsdauer einen vorgegebenen ersten Wert Tₘₐₓ übersteigt. Im Unterschied zum Verfahren gemäß der ersten Ausführungsform wird der Betrieb der Flüssigkeitspumpe 28 anschließend gemäß vorgegebener Parameter wieder aufgenommen, falls die Temperatur stromabwärts des Partikelfilters 16 unterhalb des vorgegebenen zweiten Wertes T_{continue} und die Temperatur stromabwärts des Oxidationskatalysators 18 außerhalb des vorgegebenen Regelungsintervalls für den PID-Regler liegt.

Nach Beendigung der Regenerationsdauer, die im Schritt 233 bzw. 224 festgestellt wird, wird der Zähler für die Regenerationsdauer gleich einem in der Regelvorrichtung vorgegebenen Wert gesetzt (Schritt 128), und das Verfahren zur Regeneration wird beendet, wie mit Bezug auf Figur 2c bereits beschrieben wurde.

Abschließend ist zu bemerken, daß es sich bei sämtlichen vorgegebenen Werten, die in der Regelvorrichtung 30 gespeichert sind, nicht um allzeit gültige Einzelwerte handeln muß, sondern daß für jeden Vorgabewert eine Werteliste vorliegen kann, aus der je nach aktuellem Betriebszustand (aktuelle Daten aus der Motorsteuerung, momentan herrschende Temperaturen an unterschiedlichen Punkten der Abgasanlage 12 sowie weitere Parameter wie Abgasmassenstrom etc.) der diesem Betriebszustand entsprechende oder für diesen Betriebszustand geeignetste Vorgabewert ausgewählt wird.

### Bezugszeichenliste

- 10: Verbrennungsmotor
- 12: Abgasanlage
- 14: Abgasleitung
- 16: Partikelfilter
- 18: Oxidationskatalysator
- 20: Verdampfungseinheit
- 22: Gehäuse
- 24: Heizelement
- 26: Flüssigkeitszuführung
- 28: Flüssigkeitspumpe
- 30: Regelvorrichtung
- 32: Motorsteuerung
- 34: Temperatursensoren
- 100-134: Verfahrensschritte
- 222-236: Verfahrensschritte

## Patentansprüche

1. Verfahren zur Regeneration eines Partikelfilters (16) mit vorgeschaltetem Oxidationskatalysator (18) in einer Kfz-Abgasanlage (12) mit einer Regenerationsvorrichtung, die eine Verdampfungseinheit (20) zur Einbringung eines aus einer oxidierbaren Flüssigkeit erzeugten Dampfes in den Abgasstrom vor dem Oxidationskatalysator (18) umfasst, wobei die Verdampfungseinheit (20) ein in einem Gehäuse (22) angeordnetes Heizelement (24) sowie eine Flüssigkeitszuführung (26) mit einer regelbaren Flüssigkeitspumpe (28) aufweist,
**gekennzeichnet durch** die folgenden Verfahrensschritte, die periodisch durchlaufen werden:
a) der Regenerationsvorgang wird in Abhängigkeit vom Gegendruck des Partikelfilters (16) oder der seit dem letzten Regenerationsvorgang vergangenen Zeit eingeleitet;
b) das Heizelement (24) wird eingeschaltet, sobald die Temperatur stromaufwärts des Oxidationskatalysators (18) einen vorgegebenen Mindestwert (T_{light-off}) übersteigt;
c) eine vorgegebene Vorheizzeit für das Heizelement (24) wird abgewartet;
d) die Flüssigkeitspumpe (28) wird mit einer vorgegebenen Förderleistung eingeschaltet;
e) eine vorgegebene Pumpdauer wird abgewartet;
f) die Flüssigkeitspumpe (28) wird gemäß vorgegebener Parameter betrieben, falls stromabwärts des Oxidationskatalysators (18) eine höhere Temperatur herrscht als stromaufwärts des Oxidationskatalysators (18);
g) eine vorgegebene Regenerationsdauer wird abgewartet, die beginnt, sobald die Temperatur stromabwärts des Oxidationskatalysators (18) einen vorgegebenen Mindestwert (T_{reg_min}) überschritten hat, wobei während der Regenerationsdauer die Temperatur stromabwärts des Partikelfilters (16) periodisch überprüft und gegebenenfalls zumindest durch Beeinflussung der eingebrachten Flüssigkeitsmenge geregelt wird;
h) die Flüssigkeitspumpe (28) wird ausgeschaltet;
i) eine vorgegebene Nachheizzeit des Heizelements (24) wird abgewartet;
j) das Heizelement (24) wird ausgeschaltet.

2. Verfahren nach Anspruch 1, **dadurch gekennzeichnet, dass** ein Fehler registriert wird, falls nach dem Abwarten der vorgegebenen Pumpdauer (Schritt e) die Temperatur stromabwärts des Oxidationskatalysators (18) nicht höher ist als die Temperatur stromaufwärts des Oxidationskatalysators (18).

3. Verfahren nach Anspruch 2, **dadurch gekennzeichnet, dass** nach dem Registrieren des Fehlers zu Schritt d) gesprungen wird, solange die Anzahl der registrierten Fehler einen vorgegebenen Maximalwert nicht überschreitet.

4. Verfahren nach Anspruch 3, **dadurch gekennzeichnet, dass** nach Überschreiten des vorgegebenen Maximalwerts für registrierte Fehler der Regenerationsvorgang abgebrochen und ein Fehlersignal ausgegeben wird.

5. Verfahren nach einem der Ansprüche 1 bis 4, **dadurch gekennzeichnet, dass** die Flüssigkeitspumpe (28) ausgeschaltet wird, sobald die Temperatur stromabwärts des Partikelfilters während der Regenerationsdauer (Schritt g) einen vorgegebenen ersten Wert (Tₘₐₓ) übersteigt.

6. Verfahren nach Anspruch 5, **dadurch gekennzeichnet, dass** nach dem Ausschalten der Flüssigkeitspumpe (28) während der Regenerationsdauer der Betrieb der Flüssigkeitspumpe (28) gemäß vorgegebener Parameter wieder aufgenommen wird, solange die vorgegebene Regenerationsdauer nicht beendet ist und sobald eine der folgenden Bedingungen eintritt, die in der angegebenen Reihenfolge periodisch geprüft werden:
- die Temperatur stromabwärts des Partikelfilters (16) liegt unterhalb eines vorgegebenen zweiten Wertes (T_{continue});
- die Temperatur stromabwärts des Oxidationskatalysators (18) unterschreitet einen vorgegebenen Mindestwert (T_{reg_min});
- die Temperatur stromabwärts des Partikelfilters (16) liegt nicht länger oberhalb des vorgegebenen ersten Wertes (Tₘₐₓ).

7. Verfahren nach einem der Ansprüche 1 bis 5, **dadurch gekennzeichnet, dass** ein PID-Regler zu Regelung der Temperatur während der Regenerationsdauer (Schritt g) eingesetzt wird, sofern die Temperatur stromabwärts des Oxidationskatalysators (18) innerhalb eines vorgegebenen Regelungsintervalls liegt.

8. Verfahren nach Anspruch 7, **dadurch gekennzeichnet, dass** nach jedem Regelungsvorgang des PID-Reglers eine Überprüfung erfolgt, ob die Temperatur stromabwärts des Oxidationskatalysators (18) noch innerhalb des vorgegebenen Regelungsintervalls liegt.

9. Verfahren nach Anspruch 5 und einem der Ansprüche 7 und 8, **dadurch gekennzeichnet, dass** nach dem Ausschalten der Flüssigkeitspumpe (28) während der Regenerationsdauer der Betrieb der Flüssigkeitspumpe (28) gemäß vorgegebener Parameter wieder aufgenommen wird, falls die Temperatur stromabwärts des Partikelfilters (16) unterhalb eines vorgegebenen zweiten Wertes (T_{continue}) liegt und die Temperatur stromabwärts des Oxidationskatalysators (18) außerhalb des vorgegebenen Regelungsintervalls für den PID-Regler liegt.

10. Verfahren nach einem der Ansprüche 1 bis 9, **dadurch gekennzeichnet, dass** während des Betriebs des Heizelements (24) der durch das Heizelement (24) fließende Strom überwacht wird.

11. Verfahren nach einem der Ansprüche 1 bis 10, **dadurch gekennzeichnet, dass** der Regenerationsvorgang nur bei laufendem Motor (10) eingeleitet wird.

## Claims

1. A method of regenerating a particulate filter (16) with upstream oxidation catalytic converter (18) in an automotive exhaust system (12) with a regeneration device which includes a vaporization unit (20) for introducing a vapour generated from an oxidizable fluid into the exhaust gas stream before the oxidation catalytic converter (18), the vaporization unit (20) including a heating element (24) arranged in a housing (22) and a fluid supply (26) having a controllable fluid pump (28),
**characterized by** the following method steps, which are performed periodically:
a) the regeneration process is initiated as a function of the back pressure of the particulate filter (16) or the time elapsed since the latest regeneration process;
b) the heating element (24) is switched on as soon as the temperature upstream of the oxidation catalytic converter (18) exceeds a specified minimum value (T_{light-off});
c) a specified preheating time for the heating element (24) is allowed to pass;
d) the fluid pump (28) is switched on with a specified delivery rate;
e) a specified pumping period is allowed to pass;
f) the fluid pump (28) is operated according to specified parameters if a higher temperature exists downstream of the oxidation catalytic converter (18) than upstream of the oxidation catalytic converter (18);
g) a specified regeneration period is allowed to pass, which starts as soon as the temperature downstream of the oxidation catalytic converter (18) has exceeded a specified minimum value (T_{reg_min}), wherein during the regeneration period the temperature downstream of the particulate filter (16) is checked periodically and, if required, is controlled at least by influencing the fluid quantity introduced;
h) the fluid pump (28) is switched off;
i) a specified postheating time of the heating element (24) is allowed to pass;
j) the heating element (24) is switched off.

2. The method according to claim 1, **characterized in that** an error is registered if after the specified pumping period is allowed to pass (step e), the temperature downstream of the oxidation catalytic converter (18) is not higher than the temperature upstream of the oxidation catalytic converter (18).

3. The method according to claim 2, **characterized in that** after registering the error, a jump to step d) occurs, as long as the number of registered errors does not exceed a specified maximum value.

4. The method according to claim 3, **characterized in that** after exceeding the specified maximum value for registered errors, the regeneration process is stopped and an error signal is issued.

5. The method according to any of claims 1 to 4, **characterized in that** the fluid pump (28) is switched off as soon as the temperature downstream of the particulate filter exceeds a specified first value (Tₘₐₓ) during the regeneration period (step g).

6. The method according to claim 5, **characterized in that** after switching off the fluid pump (28) during the regeneration period, the operation of the fluid pump (28) is resumed according to specified parameters as long as the specified regeneration period is not terminated and as soon as one of the following conditions occurs, which are periodically checked in the indicated order:
- the temperature downstream of the particulate filter (16) is below a specified second value (T_{continue});
- the temperature downstream of the oxidation catalytic converter (18) falls below a specified minimum value (T_{reg_min});
- the temperature downstream of the particulate filter (16) is no longer above the specified first value (Tₘₐₓ).

7. The method according to any of claims 1 to 5, **characterized in that** a PID controller is used for controlling the temperature during the regeneration period (step g) if the temperature downstream of the oxidation catalytic converter (18) is within a specified control interval.

8. The method according to claim 7, **characterized in that** after each control operation of the PID controller, it is checked whether the temperature downstream of the oxidation catalytic converter (18) still is within the specified control interval.

9. The method according to claim 5 and any of claims 7 and 8, **characterized in that** after switching off the fluid pump (28) during the regeneration period, the operation of the fluid pump (28) is resumed according to specified parameters if the temperature downstream of the particulate filter (16) is below a specified second value (T_{continue}) and the temperature downstream of the oxidation catalytic converter (18) is outside the specified control interval for the PID controller.

10. The method according to any of claims 1 to 9, **characterized in that** during operation of the heating element (24) the current flowing through the heating element (24) is monitored.

11. The method according to any of claims 1 to 10, **characterized in that** the regeneration process is initiated only with the engine (10) running.

## Revendications

1. Procédé de régénération d'un filtre à particules (16) avec catalyseur d'oxydation (18) monté en amont dans une installation de gaz d'échappement (12) d'un véhicule automobile, comportant un dispositif de régénération qui comprend une unité d'évaporation (20) pour introduire une vapeur engendrée à partir d'un liquide oxydable dans le flux de gaz d'échappement en amont du catalyseur d'oxydation (18), l'unité d'évaporation (20) présentant un élément de chauffage (24) agencé dans un boîtier (22) ainsi qu'une amenée de liquide (26) avec une pompe à liquide (28) réglable,
**caractérisé par** les étapes de procédé suivantes qui sont se déroulent périodiquement :
a) l'opération de régénération est déclenchée en fonction de la contrepression du filtre à particules (16) ou du temps passé depuis la dernière opération de régénération ;
b) l'élément de chauffage (24) est mis en marche dès que la température en amont du catalyseur d'oxydation (18) dépasse une valeur minimum (T_{tight-off}) prédéterminée ;
c) un temps de préchauffage prédéterminé pour l'élément de chauffage (24) est attendu ;
d) la pompe à liquide (28) est mise en marche avec un débit de refoulement prédéterminé ;
e) une durée de pompage prédéterminée est attendue ;
f) la pompe à liquide (28) fonctionne selon des paramètres prédéterminés dans le cas où en aval du catalyseur d'oxydation (18) règne une température plus élevée qu'en amont du catalyseur d'oxydation (18) ;
g) une durée de régénération prédéterminée est attendue, laquelle commence dès que la température en aval du catalyseur d'oxydation (18) a dépassé une valeur minimum (T_{reg_min}) prédéterminée, la température en aval du filtre à particules (16) étant vérifiée périodiquement pendant la durée de régénération et réglée le cas échéant au moins en influençant la quantité de liquide introduite ;
h) la pompe à liquide (28) est déconnectée ;
i) un temps de poursuite de chauffage prédéterminé de l'élément de chauffage (24) est attendu ;
j) l'élément de chauffage (24) est déconnecté.

2. Procédé selon la revendication 1, **caractérisé en ce qu'**une erreur est enregistrée dans le cas où après l'attente de la durée de pompage prédéterminée (étape e), la température en aval du catalyseur d'oxydation (18) n'est pas plus élevée que la température en amont du catalyseur d'oxydation (18).

3. Procédé selon la revendication 2, **caractérisé en ce qu'**après l'enregistrement de l'erreur, on saute à l'étape d) tant que le nombre des erreurs enregistrées ne dépasse pas une valeur maximum prédéterminée.

4. Procédé selon la revendication 3, **caractérisé en ce qu'**après le dépassement d'une valeur maximum prédéterminée pour des erreurs enregistrées, l'opération de régénération est interrompue et un signal d'erreur est émis.

5. Procédé selon l'une des revendications 1 à 4, **caractérisé en ce que** la pompe à liquide (28) est déconnectée dès que la température en aval du filtre à particules (16) dépasse une première valeur (Tₘₐₓ) prédéterminée pendant la durée de régénération (étape g).

6. Procédé selon la revendication 5, **caractérisé en ce qu'**après avoir déconnecté la pompe à liquide (28) pendant la durée de régénération, le fonctionnement de la pompe à liquide (28) selon des paramètres prédéterminés est repris tant que la durée de régénération prédéterminée n'est pas terminée et dès que se produit une des conditions suivantes qui sont périodiquement vérifiées dans l'ordre indiqué :
- la température en aval du filtre à particules (16) est en dessous d'une deuxième valeur (T_{continue}) prédéterminée ;
- la température en aval du catalyseur d'oxydation (18) est inférieure à une valeur minimum (T_{reg_min}) prédéterminée ;
- la température en aval du filtre à particules (16) n'est plus en dessus de la première valeur (Tₘₐₓ) prédéterminée.

7. Procédé selon l'une des revendications 1 à 5, **caractérisé en ce qu'**on utilise un régulateur PID pour régler la température pendant la durée de régénération (étape g) dans la mesure où la température en aval du catalyseur d'oxydation (18) est située dans un intervalle de réglage prédéterminé.

8. Procédé selon la revendication 7, **caractérisé en ce qu'**après chaque opération de réglage du régulateur PID est effectuée une vérification pour constater si la température en aval du catalyseur d'oxydation (18) est toujours située dans l'intervalle de réglage prédéterminé.

9. Procédé selon la revendication 5 et selon l'une des revendications 7 à 8, **caractérisé en ce qu'**après avoir déconnecté la pompe à liquide (28) pendant la durée de régénération, le fonctionnement de la pompe à liquide (28) selon des paramètres prédéterminés est repris dans le cas où la température en aval du filtre à particules (16) est située en dessous d'une deuxième valeur (T_{continue}) et la température en aval du catalyseur d'oxydation (18) est située en dehors de l'intervalle de réglage prédéterminé pour le régulateur PID.

10. Procédé selon l'une des revendications 1 à 9, **caractérisé en ce que** le courant s'écoulant à travers l'élément de chauffage (24) est surveillé pendant le fonctionnement de l'élément de chauffage (24).

11. Procédé selon l'une des revendications 1 à 10, **caractérisé en ce que** l'opération de régénération n'est déclenchée que lorsque le moteur (10) tourne.
